# FASCICULE DE BREVET EUROPEEN

(11) **EP 4 263 348 B1**
(45) Date de publication et mention de la délivrance du brevet: **04.09.2024**
(21) Numéro de dépôt: 21848003.6
(22) Date de dépôt: 13.12.2021
(51) Int. Cl.: B64C 39/02, F42D 3/00

(54) **DISPOSITIF POUR GÉNÉRER UNE ONDE DE CHOC**
VORRICHTUNG ZUR ERZEUGUNG EINER STOSSWELLE
DEVICE FOR GENERATING A SHOCK WAVE

(30) Priorité: 15.12.2020 FR 2013243
(43) Date de publication de la demande: 25.10.2023
(73) Titulaire: MND France, 73800 Sainte-Hélène-du-Lac (FR)
(72) Inventeur: MARGUERON, Patrice, 73500 Avrieux (FR)
(74) Mandataire: Germain Maureau
(86) Numéro de dépôt international: PCT/FR2021/052290
(87) Numéro de publication internationale: WO 2022/129754

(56) Documents cités:
- WO-A1-2011/124854
- WO-A1-2018/182944
- FR-A1- 2 897 931
- FR-A1- 2 925 152

## Description

La présente invention concerne un dispositif pour générer une onde de choc par détonation suivant la revendication 1, et un engin volant suivant la revendication 15, comprenant un porteur de type aéronef pilotable à distance et ledit dispositif pour générer une onde de choc par détonation.

Elle concerne en particulier un dispositif pour générer une onde de choc par détonation comprenant un ensemble, une télécommande, et un système de communication par liaison sans fil entre la télécommande et ledit ensemble pour une commande à distance dudit ensemble avec ladite télécommande, ledit ensemble comprenant un tube de détonation, un premier conduit obturable d'alimentation en fluide du tube raccordable à une source de comburant, un deuxième conduit obturable d'alimentation en fluide du tube raccordable à une source de carburant embarquable sur ledit ensemble, une unité de stockage d'énergie électrique et une unité de pilotage, ledit tube de détonation délimitant une enceinte présentant au moins une bouche de sortie.

La génération d'onde de choc notamment pour le déclenchement d'avalanches en particulier pour la protection des zones à fréquentation humaine comme les pistes ou stations de ski est une pratique ancienne. Pendant longtemps, des dispositifs fixes de type canon ont été utilisés. Le principe de ces dispositifs est de créer à l'aide d'un mélange comburant/carburant détonnant une onde de choc à la surface du manteau neigeux. De tels dispositifs fixes ont pour inconvénient de ne pas pouvoir suivre les déplacements des surépaisseurs du manteau neigeux en fonction des conditions climatiques. Sont également connus des dispositifs mobiles. Le plus simple des dispositifs mobiles est la pose d'un explosif manuellement par un professionnel en ski. Cette solution est dangereuse. Une autre solution qui ne s'est pas développée en raison de son coût consiste à déclencher des avalanches à partir d'un hélicoptère transportant une cloche remplie d'un gaz comburant et d'un gaz carburant qui explosent grâce à un système d'allumage pour créer une onde de choc sur le manteau neigeux.

Des exemples de solutions sont également décrits dans les brevets FR 2925152, WO 2018/182944 et FR 2897931.

Les ondes de chocs trouvent également une application dans le domaine de la protection des cultures contre la grêle ou celui de la lutte contre les incendies.

Un but de l'invention est de proposer un dispositif pour générer une onde de choc par détonation dont la conception simplifiée permet à un coût réduit de suivre l'évolution d'un incendie ou d'une tempête de grêle ou les déplacements des surépaisseurs du manteau neigeux en fonction des conditions climatiques sans nuire à la sécurité du dispositif.

A cet effet, l'invention a pour objet un dispositif pour générer une onde de choc par détonation, ledit dispositif comprenant un ensemble, une télécommande, et un système de communication par liaison sans fil entre la télécommande et ledit ensemble pour une commande à distance dudit ensemble avec ladite télécommande, ledit ensemble comprenant un tube de détonation, un premier conduit obturable d'alimentation en fluide du tube de détonation raccordable à une source de comburant, un deuxième conduit obturable d'alimentation en fluide du tube de détonation raccordable à une source de carburant embarquable sur ledit ensemble, une unité de stockage d'énergie électrique et une unité de pilotage, ledit tube de détonation délimitant une enceinte présentant au moins une bouche de sortie, caractérisé en ce que l'ensemble, qui est équipé de moyens d'accroche pour permettre un couplage dudit ensemble à un porteur de type aéronef piloté à distance, comprend un système de fermeture étanche de ladite au moins une bouche de sortie dudit tube de détonation pour permettre un pré-remplissage en comburant de ladite enceinte, en ce que le système de fermeture sensible à la pression est configuré pour passer d'un état dit fermé correspondant à l'état fermé de la bouche de sortie du tube de détonation à un état dit ouvert correspondant à l'état ouvert de la bouche de sortie du tube de détonation en fonction de la pression régnant à l'intérieur dudit tube de détonation, en ce que l'unité de pilotage est configurée au moins pour commander l'ouverture du deuxième conduit pour permettre la formation à l'intérieur du tube de détonation, à l'état prérempli du tube de détonation en comburant, d'un mélange gazeux comburant/carburant détonnant et en ce que l'ensemble comprend une commande principale d'ouverture du système de fermeture et une commande auxiliaire dite de secours d'ouverture du système de fermeture, cette commande de secours comprenant une réserve de gaz sous pression apte à être portée par le tube de détonation et une liaison obturable de raccordement de la réserve de gaz au tube de détonation équipée d'un ou plusieurs organes d'obturation, le ou chaque organe d'obturation étant monté mobile entre une position ouverte et une position fermée. La réalisation d'un tube équipé d'un système de fermeture de manière étanche de la bouche de sortie dudit tube permet un pré-remplissage du tube en comburant de sorte qu'il n'est pas nécessaire de transporter un réservoir de comburant supplémentaire qui en général est un réservoir de grand volume. Il en résulte une réduction du poids de l'ensemble autorisant le transport d'un tel dispositif par un aéronef pilotable à distance, tel qu'un drone. De même, la commande de secours qui comprend une réserve de gaz sous pression apte à être portée par le tube, c'est-à-dire embarquable, et une liaison obturable de raccordement de la réserve de gaz à l'intérieur du tube équipée d'un ou plusieurs organes d'obturation avec le ou chaque organe d'obturation monté mobile entre une position ouverte et une position fermée, permet à l'état prérempli de l'enceinte en comburant, le passage du système de fermeture de ladite au moins une bouche de sortie de l'état fermé à l'état ouvert par simple ouverture de la liaison obturable de raccordement de la réserve de gaz au tube de détonation de ladite commande de secours Le système de fermeture de ladite au moins une bouche de sortie est donc configuré pour, en fonction de la pression initiale régnant à l'intérieur du tube, passer de l'état fermé à l'état ouvert, à l'état ouvert de la liaison obturable de raccordement de la réserve de gaz au tube de ladite commande de secours. La possibilité de préremplir le tube en comburant permet d'augmenter la pression initiale à l'intérieur de l'enceinte. Ainsi, l'ouverture de la liaison obturable de raccordement de la réserve de gaz au tube de ladite commande de secours permet de manière simple, grâce à la réserve de gaz sous pression alimentant ladite enceinte, de générer une augmentation de pression à l'intérieur de l'enceinte, cette augmentation de pression permettant le passage du système de fermeture sensible à la pression de l'état fermé à l'état ouvert. Le fait de pouvoir préremplir le tube en comburant permet de réduire le volume de la réserve de gaz de de la commande d'ouverture de secours. Il en résulte à nouveau un gain de poids facilitant un transport aérien dudit dispositif. La présence de la commande de secours apte à permettre le passage à l'état ouvert du système de fermeture de la au moins une bouche de sortie du tube sans nécessiter une explosion du mélange détonnant permet de manière simple et sans risque, y compris à distance, un désarmement du dispositif. Il en résulte un fonctionnement sûr du dispositif.

Selon un mode de réalisation de l'invention, la télécommande comprend des organes de commande actionnables manuellement, lesdits organes de commande comprenant au moins un organe de commande marche/arrêt du dispositif, un organe de commande d'ouverture/fermeture du deuxième conduit obturable, un ou plusieurs organes de commande de la commande principale d'ouverture du système de fermeture et un organe de commande de la commande de secours d'ouverture du système de fermeture actif sur l'ouverture/fermeture de la liaison obturable de raccordement de la réserve de gaz au tube de détonation de ladite commande de secours. La conception de la télécommande permet de commander à distance d'une part, la commande principale d'ouverture du système de fermeture qui s'opère par mise à feu du mélange détonnant, d'autre part, la commande de secours qui peut permettre un désarmement du dispositif.

Selon un mode de réalisation de l'invention, le système de communication par liaison sans fil comprend au moins un émetteur intégré à la télécommande et au moins un récepteur intégré audit ensemble et l'unité de pilotage dudit ensemble est configurée pour acquérir des données du récepteur du système de communication par liaison sans fil. Grâce à cette conception, l'unité de pilotage est apte à recevoir des données signalant une défaillance du système de communication par liaison sans fil.

Selon un mode de réalisation de l'invention, l'unité de pilotage dudit ensemble est configurée pour acquérir des données de l'unité de stockage d'énergie électrique. Grâce à cette conception, l'unité de pilotage est apte à recevoir des données signalant un problème d'alimentation en énergie, tel qu'un problème de tension au niveau de l'unité de stockage d'énergie électrique.

Selon un mode de réalisation de l'invention, la liaison obturable de raccordement de la réserve de gaz au tube de détonation de la commande de secours étant équipée de plusieurs organes d'obturation, lesdits organes d'obturation sont disposés en série sur ladite liaison. La présence de plusieurs organes d'obturation permet en toutes circonstances de garantir un fonctionnement sûr du dispositif.

Selon un mode de réalisation de l'invention, l'unité de pilotage dudit ensemble est configurée pour commander le passage de l'état fermé à l'état ouvert du ou d'au moins l'un des organes d'obturation de la liaison obturable de raccordement de la réserve de gaz au tube de détonation de la commande de secours au moins en fonction des données fournies par le récepteur du système de communication par liaison sans fil. Cette disposition permet de désarmer le dispositif par vidange du tube prérempli de comburant lorsqu'une défaillance du système de communication est constatée.

Selon un mode de réalisation de l'invention, l'unité de pilotage dudit ensemble est configurée pour commander le passage de l'état fermé à l'état ouvert du ou d'au moins l'un des organes d'obturation de la liaison obturable de raccordement de la réserve de gaz au tube de détonation de la commande de secours au moins en fonction des données fournies par l'unité de stockage d'énergie électrique. Cette conception permet de désarmer le dispositif par vidange du tube prérempli de comburant lorsqu'une défaillance de l'unité de stockage d'énergie électrique est constatée.

Selon un mode de réalisation de l'invention, l'unité de pilotage est configurée pour commander le passage de l'état fermé à l'état ouvert du ou d'au moins l'un des organes d'obturation de la liaison obturable de raccordement de la réserve de gaz au tube de détonation de la commande de secours au moins à l'état actionné de l'organe de commande de la commande de secours d'ouverture du système de fermeture. A nouveau, cette possibilité permet un désarmement du dispositif à distance et de manière simple.

Selon un mode de réalisation de l'invention, la télécommande comprend au moins un organe de commande dit d'armement du dispositif actionnable manuellement, cet organe de commande étant commun ou distinct du ou des organes de commande marche/arrêt du dispositif, au moins l'un des organes d'obturation de la liaison obturable de raccordement de la réserve de gaz au tube de détonation de la commande de secours est un organe d'obturation normalement fermé et l'unité de pilotage est configurée pour commander le passage de l'état fermé à l'état ouvert dudit organe d'obturation normalement fermé au moins à l'état actionné de l'organe de commande d'armement.

Selon un mode de réalisation de l'invention, la télécommande comprend au moins un organe de commande dit d'armement du dispositif actionnable manuellement, cet organe de commande étant commun ou distinct du ou des organes de commande marche/arrêt du dispositif, au moins l'un des organes d'obturation de la liaison obturable de raccordement de la réserve de gaz au tube de détonation de la commande de secours est un organe d'obturation normalement ouvert et l'unité de pilotage est configurée pour commander le passage de l'état ouvert à l'état fermé dudit organe d'obturation normalement ouvert au moins à l'état actionné de l'organe de commande marche/arrêt du dispositif.

Selon un mode de réalisation de l'invention, l'unité de pilotage est configurée pour commander le passage de l'état ouvert à l'état fermé dudit organe d'obturation normalement fermé et le passage de l'état fermé à l'état ouvert dudit organe d'obturation normalement ouvert au moins à l'état actionné du ou des organes de commande de la commande principale d'ouverture du système de fermeture. Cette conception des organes d'obturation permet d'éviter toute ouverture intempestive de la liaison obturable de raccordement de la réserve de gaz au tube de détonation de la commande de secours.

Selon un mode de réalisation de l'invention, le gaz de la réserve de gaz sous pression de la commande de secours est un gaz dit neutre c'est-à-dire non réactif chimiquement avec le mélange gazeux comburant/carburant détonnant. Ainsi, le gaz de la réserve de gaz est apte à permettre une dilution du mélange détonnant

Selon un mode de réalisation de l'invention, la commande principale d'ouverture du système de fermeture comprend un détonateur s'étendant au moins partiellement à l'intérieur du tube de détonation. Un tel détonateur est bien évidemment actif à l'état actionné du ou des organes de commande de la commande principale d'ouverture du système de fermeture. Le système de fermeture qui est sensible à la pression régnant à l'intérieur du tube est configuré pour passer de l'état fermé à l'état ouvert sous l'effet d'une augmentation de la pression à l'intérieur du tube. La commande principale d'ouverture du système de fermeture est une commande configurée pour générer une augmentation de la pression à l'intérieur du tube par mise à feu et par suite explosion du mélange comburant/carburant détonnant tandis que la commande de secours est configurée pour générer une augmentation de la pression à l'intérieur du tube par injection d'un gaz à l'intérieur du tube. Le passage de l'état fermé à l'état ouvert du système de fermeture peut donc être commandé à distance sans nécessiter l'explosion du mélange détonnant.

Selon un mode de réalisation de l'invention, le système de fermeture comprend un élément gonflable fixé au tube de détonation et configuré pour se détacher au moins partiellement du tube de détonation à l'état gonflé au-delà d'une pression de gonflage prédéterminée. Il en résulte une simplicité du système de fermeture et un poids réduit de ce dernier.

L'invention a encore pour objet un engin volant comprenant un porteur de type aéronef pilotable à distance et un dispositif pour générer une onde de choc par détonation, caractérisé en ce que le dispositif pour générer une onde de choc par détonation est conforme à celui décrit ci-dessus et en ce que l'ensemble du dispositif est couplable au porteur.

### Brève description des dessins

L'invention sera bien comprise à la lecture de la description suivante d'exemples de réalisation, en référence aux dessins annexés dans lesquels :
[Fig. 1] représente une vue en coupe d'un engin volant à l'état fermé du système de fermeture de la bouche de sortie du tube
[Fig. 2] représente une vue en coupe d'un engin volant à l'état ouvert du système de fermeture de la bouche de sortie du tube

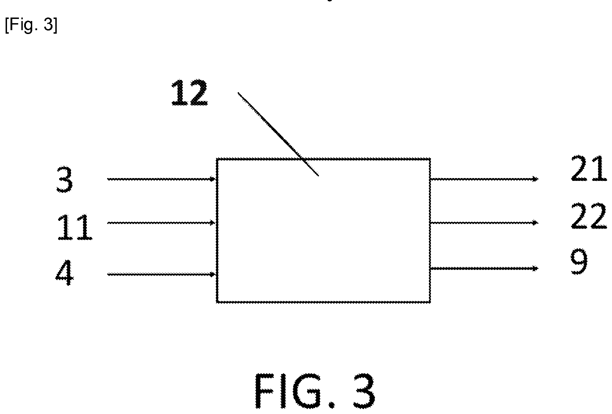

[Fig. 3] représente, sous forme de bloc, le fonctionnement de l'unité de pilotage.

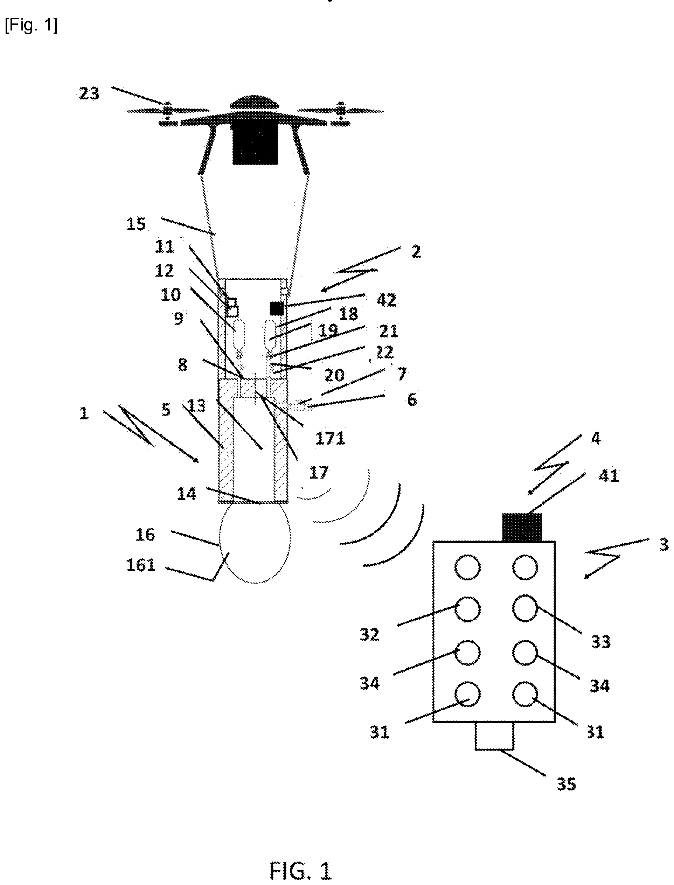

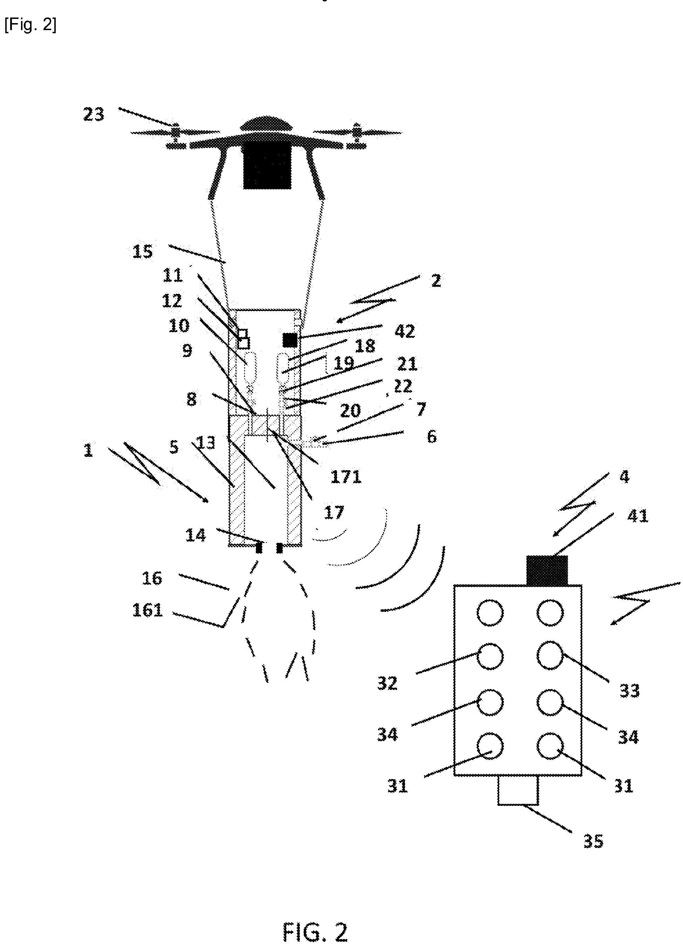

Comme mentionné ci-dessus, l'invention concerne un dispositif 1 pour générer une onde de choc par détonation, ce dispositif 1 étant couplable à un porteur 23 de type aéronef pilotable à distance, tel que le drone représenté à la figure 1, pour former un engin volant comme illustré aux figures 1 et 2.

Le dispositif 1 sera décrit ci-dessous dans le cadre d'une application à un dispositif 1 pour déclencher une avalanche mais d'autres applications de l'onde de choc générée, telles que l'extinction d'incendie ou la protection de culture contre la grêle, peuvent également être envisagées sans sortir du cadre de la présente invention.

Ce dispositif 1 comprend donc un ensemble 2, une télécommande 3 et un système 4 de communication par liaison sans fil entre la télécommande 3 et ledit ensemble 2 pour une commande à distance dudit ensemble 2 avec ladite télécommande 3.

Dans les exemples représentés, le système 4 de communication par liaison sans fil, qui est un système de communication par liaison radio, comprend un émetteur 41 intégré à la télécommande 3 et un récepteur 42 intégré audit ensemble 2. Idéalement, l'ensemble 2 est d'un poids inférieur à 15 kg. L'ensemble 2 comprend un tube 5 de détonation. Ce tube 5 de détonation peut être composé d'un matériau résistant et léger. A cet effet, ce tube 5 de détonation peut être en plastique pour un tube à usage unique ou en métal pour un tube à usage non unique. Ce tube 5 de détonation est, dans l'exemple représenté, un tube cylindrique. Ce tube 5 de détonation est un tube rigide qui peut, par exemple, présenter une longueur de 1000 mm et un diamètre de 200 mm.

Ce tube 5 de détonation délimite intérieurement une enceinte 13 qui présente une bouche 14 de sortie disposée, dans les exemples représentés, au niveau de l'une des extrémités appelée extrémité inférieure du tube 5 de détonation.

Le dispositif 1 comprend un système 16 de fermeture étanche de cette bouche 14 de sortie. Le système 16 de fermeture est, indépendamment de son mode de réalisation, un système 16 de fermeture sensible à la pression configuré pour passer d'un état dit fermé correspondant à l'état fermé de la bouche 14 de sortie du tube 5 de détonation à un état dit ouvert correspondant à l'état ouvert de la bouche 14 de sortie du tube 5 de détonation en fonction de la pression régnant à l'intérieur du tube 5 de détonation.

Dans l'exemple représenté, le système 16 de fermeture comprend un élément 161 gonflable fixé au tube 5 de détonation et configuré pour se détacher au moins partiellement du tube 5 de détonation à l'état gonflé au-delà d'une pression de gonflage prédéterminée. Ce système 16 de fermeture aurait pu de manière similaire être réalisé sous forme d'un clapet rappelé en position fermée ou d'un film ou d'une membrane ou tout système de fermeture au fonctionnement équivalent.

L'enceinte 13 du tube 5 de détonation est destinée à être remplie d'un mélange carburant/comburant détonant apte à être mis à feu. On comprend que l'explosion du mélange entraîne une surpression à l'intérieur du tube 5 de détonation apte à déclencher le passage du système 16 de fermeture de l'état fermé à l'état ouvert. Pour permettre la formation d'un tel mélange gazeux carburant/comburant détonant, le dispositif 1 comprend un premier conduit 6 obturable d'alimentation en fluide du tube 5 de détonation raccordable à une source de comburant, telle que de l'oxygène, sous forme par exemple d'une bouteille d'oxygène, ou d'air comprimé fourni, par exemple, par un compresseur. Le premier conduit 6 est, pour son obturation, équipé d'un organe 7 d'obturation, tel qu'une électrovanne ou une vanne à actionnement manuel.

Du fait de la conception du système 16 de fermeture étanche du tube 5 de détonation, l'enceinte 13 du tube 5 de détonation peut être une enceinte fermée à l'intérieur de laquelle le comburant peut être emprisonné. Le tube 5 de détonation peut dont être prérempli en comburant avant son transport. Pour permettre un tel remplissage, il suffit de raccorder le premier conduit 6 à la source de comburant, telle qu'une bouteille d'oxygène sous pression, et d'ouvrir l'organe d'obturation ou de fermeture du premier conduit 6. Un débitmètre ou un capteur de pression de l'enceinte peuvent permettre de contrôler le remplissage du tube 5 de détonation.

Une fois le remplissage opéré, le premier conduit 6 peut être refermé et la source de comburant peut être écartée du dispositif 1 car elle n'est plus nécessaire pour le fonctionnement ultérieur du dispositif 1 jusqu'à la mise à feu du mélange.

Le dispositif 1 comprend encore un deuxième conduit 8 obturable pour l'alimentation en fluide du tube 5 de détonation raccordable à une source 10 de carburant embarquable sur ledit ensemble 2, c'est-à-dire transportable avec le tube 5 de détonation. Cette source 10 de carburant peut être formée par un réservoir contenant un carburant sous forme liquide ou sous forme gazeuse tel que de l'hydrogène ou du propane.

Le dispositif 1 peut comprendre un système de chauffage, tel qu'une résistance électrique, disposé autour du réservoir pour amener le carburant à une température prédéterminée avant admission du carburant dans le tube 5 de détonation. A nouveau, le deuxième conduit 8 obturable est équipé, pour son obturation, d'un organe d'obturation tel qu'une électrovanne, représenté en 9 aux figures. Cet organe d'obturation est monté mobile entre une position fermée et une position ouverte du deuxième conduit 8 et est apte à être commandé en déplacement par une unité 12 de pilotage du dispositif 1 qui sera décrit ci-après, cette unité 12 de pilotage étant apte à recevoir en entrée des données résultant de l'actionnement de la télécommande.

A l'état ouvert du deuxième conduit 8, le carburant est introduit dans le tube 5 de détonation pour former avec le comburant déjà présent dans le tube, un mélange carburant/comburant détonant. Dans les exemples représentés, la source 10 de carburant, qui est formée par un réservoir de propane est fixée au niveau de l'extrémité supérieure du tube 5 de détonation à l'état positionné verticalement du tube 5 de détonation avec l'extrémité inférieure du tube formant la bouche 14 de sortie du tube 5 de détonation munie du système 16 de fermeture. En particulier, et comme représenté, le tube 5 de détonation est délimité par une paroi latérale périphérique. Cette paroi latérale périphérique peut se prolonger au-delà de l'extrémité supérieure du tube 5 de détonation pour former un logement ouvert à l'intérieur duquel la source 10 de carburant peut être disposée. Cette source 10 de carburant est ainsi protégée pendant le transport de l'ensemble 2. Cette source 10 de carburant et le tube 5 de détonation sont ainsi solidaires en déplacement.

Le premier conduit 6 traverse, quant à lui, la paroi latérale périphérique du tube pour déboucher dans le tube 5 de détonation. Les premier et deuxième conduits sont les plus courts possible pour réduire le poids de l'ensemble 2.

L'ensemble 2 comprend encore une unité 11 de stockage d'énergie électrique, telle qu'une batterie. Cette unité 11 de stockage d'énergie électrique peut, de manière similaire, à la source 10 de carburant, être logée dans un logement ménagé dans le prolongement de l'extrémité supérieure du tube 5 de détonation. Cette unité 11 de stockage d'énergie électrique peut être équipée d'un capteur de détection de la tension électrique de ladite unité 11.

Comme mentionné ci-dessus, ledit ensemble 2 comprend encore une unité 12 de pilotage. Ladite unité 12 de pilotage se présente sous la forme d'un système électronique et/ou informatique qui comprend par exemple un microprocesseur et une mémoire de travail. Selon un aspect particulier, l'unité de pilotage peut se présenter sous la forme d'un automate programmable. Autrement dit, les fonctions et étapes décrites peuvent être mise en oeuvre sous forme de programme informatique ou via des composants matériels (p. ex. des réseaux de portes programmables). En particulier, les fonctions et étapes opérées par l'unité de pilotage ou ses modules peuvent être réalisées par des jeux d'instructions ou modules informatiques implémentés dans un processeur ou contrôleur ou être réalisées par des composants électroniques dédiés ou des composants de type FPGA ou ASIC. Il est aussi possible de combiner des parties informatiques et des parties électroniques. Lorsqu'il est précisé que l'unité ou des moyens ou modules de ladite unité sont configurés pour réaliser une opération donnée, cela signifie que l'unité comprend des instructions informatiques et les moyens d'exécution correspondants qui permettent de réaliser ladite opération et/ou que l'unité comprend des composants électroniques correspondants.

Comme mentionné ci-dessus, l'unité 12 de pilotage est configurée au moins pour commander l'ouverture du deuxième conduit 8 par action sur l'organe 9 d'obturation ou de fermeture du deuxième conduit 8. L'unité 12 de pilotage dudit ensemble 2 est configurée pour accueillir des données de l'unité 11 de stockage d'énergie électrique. En particulier, le capteur de détection de la tension électrique peut adresser un signal à l'unité 12 de pilotage. L'unité 12 de pilotage est apte, en fonction du signal, à détecter une défaillance de l'unité 11 de stockage d'énergie électrique et piloter le reste dudit ensemble 2 en conséquence.

Pour permettre un transport aérien de l'ensemble 2 du dispositif 1, l'ensemble 2 comprend des moyens 15 d'accroche. Ces moyens 15 d'accroche sont configurés pour permettre un couplage de l'ensemble 2 au porteur 23 formé par le drone dans l'exemple représenté. Ces moyens 15 d'accroche peuvent affecter un grand nombre de formes. Dans l'exemple représenté, les moyens 15 d'accroche comprennent des câbles fixés à une extrémité du prolongement axial du tube 5 de détonation et équipés à leur extrémité opposée de mousquetons pour permettre une fixation par lesdits câbles à l'état suspendu de l'ensemble 2 au porteur 23.

L'ensemble 2 comprend encore une commande 17 principale d'ouverture du système 16 de fermeture. Cette commande 17 principale comprend un détonateur 171 s'étendant au moins partiellement à l'intérieur du tube 5 de détonation. Cette commande 17 principale est commandable à partir de la télécommande 3 qui sera décrite plus en détail ci-après. Par "détonateur 171" on entend ici tout système permettant un amorçage de la détonation du mélange carburant/comburant. Ce détonateur peut être un dispositif d'allumage. Ce dispositif d'allumage peut être du type piézoélectrique. Il peut également comporter une pierre à briquet ou un inflammateur électrique d'explosif ou des électrodes de mise à feu associées à une source de haute tension pour créer un arc entre lesdites électrodes. Indépendamment de sa conception, un tel détonateur 171 permet, à l'état activé, une mise à feu du mélange détonant carburant/comburant. Ce détonateur 171 est actif à l'état actionné du ou des organes de commande de la commande 17 principale d'ouverture du système 16 de fermeture, ces organes 34 de commande, tels que des boutons de commande, étant portés par la télécommande 3.

Enfin, pour parfaire le dispositif 1, l'ensemble 2 comprend une commande 18 auxiliaire dite de secours d'ouverture du système 16 de fermeture. Cette commande 18 de secours comprend une réserve 19 de gaz sous pression apte à être portée par le tube 5 de détonation, c'est-à-dire apte à être montée sur l'ensemble 2 et une liaison 20 obturable de raccordement de la réserve 19 de gaz au tube 5 de détonation. Cette liaison 20 obturable est équipée, pour son obturation, d'un ou plusieurs organes d'obturation. Le ou chaque organe d'obturation est monté mobile entre une position ouverte et une position fermée. Dans les exemples représentés, deux organes d'obturation, qui seront décrits ci-après, sont prévus.

La réserve 19 de gaz sous pression est une cartouche de gaz qui à nouveau peut être logée dans le logement ménagé par le prolongement axial du tube 5 de détonation. Cette réserve 19 de gaz est donc ici à côté de la source 10 de carburant. Le gaz de la réserve 19 de gaz sous pression de la commande 18 de secours est un gaz dit neutre, c'est-à-dire non réactif chimiquement avec le mélange gazeux carburant/comburant détonant. A titre d'exemple, ce gaz peut être du gaz carbonique ou un gaz inerte tel que de l'argon ou de l'azote. La présence de cette réserve 19 de gaz permet, à l'état prérempli de l'enceinte en comburant, le passage du système 16 de fermeture de la bouche de sortie du tube 5 de détonation de l'état fermé à l'état ouvert par simple ouverture de la liaison 20 obturable de raccordement de la réserve de gaz au tube 5 de détonation de ladite commande 18 de secours.

Cette ouverture de la liaison 20 obturable de raccordement de la réserve 19 de gaz au tube 5 de détonation de ladite commande 18 de secours n'est déclenchée que lorsque cela est nécessaire pour désarmer l'ensemble 2. En effet, l'ouverture de la liaison 20 obturable de raccordement de la réserve 19 de gaz au tube 5 de détonation de la commande 18 de secours permet d'augmenter la pression à l'intérieur du tube 5 de détonation. Cette augmentation de la pression entraîne le passage de l'état fermé à l'état ouvert du système 16 de fermeture étanche de la bouche 14 de sortie du tube 5 de détonation. Une fois la bouche 14 de sortie ouverte, tout le comburant poussé par le gaz neutre de la réserve de gaz s'échappe du tube 5 de détonation de sorte que toute exploitation ultérieure est impossible. Le même phénomène est observé y compris après introduction du carburant dans le tube 5 de détonation tant que la commande 17 principale n'a pas été commandée en fonctionnement à partir de la télécommande 3.

En résumé, l'ensemble 2 comprend une commande 17 principale et une commande 18 de secours d'ouverture du système 16 de fermeture étanche, l'une, apte à permettre l'ouverture du système 16 de fermeture par détonation du mélanger comburant/carburant, l'autre, par admission de gaz à l'intérieur du tube 5 de détonation. Ces commandes 17 principale et 18 de secours peuvent être commandées notamment à partir de la télécommande 3.

Ainsi, la télécommande 3 comprend des organes de commande actionnables manuellement. Ces organes de commande comprennent au moins un organe 31 de commande marche/arrêt du dispositif 1, un organe 33 de commande d'ouverture/fermeture du deuxième conduit 8 obturable, un ou plusieurs organes 34 de commande de la commande 17 principale d'ouverture du système 16 de fermeture et un organe 35 de commande de la commande 18 de secours d'ouverture du système 16 de fermeture actif sur l'ouverture/fermeture de la liaison 20 obturable de raccordement de la réserve 19 de gaz au tube 5 de détonation de ladite commande 18 de secours.

Dans les exemples représentés, il est prévu plusieurs organes 34 de commande de la commande 17 principale d'ouverture du système 18 de fermeture et plusieurs organes 31 de commande marche/arrêt du dispositif 1. La présence de plusieurs organes de commande devant être actionnés simultanément constitue une sécurité. Ainsi, une activation intempestive de la commande 17 principale ou une mise en marche intempestive de la télécommande sont empêchées.

Comme mentionné ci-dessus, la liaison 20 obturable de raccordement de la réserve 19 de gaz au tube 5 de détonation de la commande 18 de secours peut être équipée d'un ou plusieurs organes d'obturation. Dans les exemples représentés, deux organes d'obturation représentés en 21 et 22 aux figures sont disposés en série sur ladite liaison 20. Chaque organe d'obturation est formé par une électrovanne. L'unité 12 de pilotage est configurée pour commander le passage de l'état fermé à l'état ouvert et inversement desdits organes 21 et 22 d'obturation en fonction d'un certain nombre de conditions qui seront décrites ci-après.

Ainsi, l'unité 12 de pilotage dudit ensemble 2 est configurée pour commander le passage de l'état fermé à l'état ouvert du ou d'au moins l'un des organes d'obturation de la liaison 20 obturable de raccordement de la réserve 19 de gaz au tube 5 de détonation de la commande 18 de secours au moins en fonction des données fournies par le récepteur 42 du système 4 de communication par liaison sans fil, cette unité 12 de pilotage dudit ensemble 2 étant bien évidemment configurée pour acquérir des données du récepteur 42 du système 4 de communication par liaison sans fil. Il est ainsi possible de commander la commande 18 de secours de manière automatique à partir des données fournies par le récepteur 42 du système 4 de commande par liaison sans fil. Ainsi, en cas de défaillance du système 4 de communication et en particulier dans le cas d'une absence de réception d'un signal de l'émetteur par le récepteur 42, l'unité 12 de pilotage est configurée pour commander la commande 18 de secours, c'est-à-dire commander l'ouverture de la liaison 20 obturable de raccordement de la réserve 19 de gaz au tube 5 de détonation de la commande 18 de secours.

L'unité 12 de pilotage dudit ensemble 2 est également configurée pour commander le passage de l'état fermé à l'état ouvert du ou d'au moins l'un des organes d'obturation de la liaison 20 obturable de raccordement de la réserve 19 de gaz au tube 5 de détonation de la commande 18 de secours pour le passage à l'état ouvert de ladite liaison 20 au moins en fonction des données fournies par l'unité 11 de stockage d'énergie électrique. Ainsi, une défaillance de l'unité 11 de stockage d'énergie permet de désarmer l'ensemble 2.

De même, l'unité 12 de pilotage est configurée pour commander le passage de l'état fermé à l'état ouvert du ou d'au moins l'un des organes d'obturation de la liaison 20 obturable de raccordement de la réserve 19 de gaz au tube 5 de détonation de la commande 18 de secours pour le passage à l'état ouvert de ladite liaison 20 au moins à l'état actionné de l'organe 35 de commande de la commande 18 de secours d'ouverture du système 16 de fermeture. Cet organe 35 de commande de la commande 18 de secours d'ouverture du système 16 de fermeture peut être considéré comme l'équivalent d'un bouton d'arrêt d'urgence.

Dans les exemples représentés, l'un des organes d'obturation de la liaison 20 obturable de raccordement de la réserve 19 de gaz au tube 5 de détonation de la commande 18 de secours est un organe d'obturation normalement fermé formé par une électrovanne et représenté en 21 aux figures, tandis que l'autre des organes d'obturation de la liaison 20 obturable de raccordement de la réserve 19 de gaz au tube 5 de détonation de la commande 18 de secours est un organe normalement ouvert formé par une électrovanne et représenté en 22 aux figures.

Dans les exemples représentés, la télécommande 3 comprend en outre un organe 32 de commande, tel qu'un bouton d'armement du dispositif 1, actionnable manuellement. Cet organe 32 de commande d'armement peut être commun ou distinct du ou des organes 31 de commande marche/arrêt du dispositif 1.

Dans l'exemple représenté, ces organes de commande d'armement marche/arrêt sont distincts car le dispositif 1 est apte à fonctionner avec différents ensembles 2. Dans le cas où le dispositif 1 est apte à fonctionner avec un seul ensemble 2, ces organes sont communs.

Il existe donc également un organe de commande pour sélectionner le tube ou l'ensemble 2 à apparier avec la télécommande 3 lorsque cela est nécessaire.

Dans les exemples représentés, l'unité 12 de pilotage est configurée pour commander le passage de l'état fermé à l'état ouvert de l'organe 21 d'obturation normalement fermé au moins à l'état actionné de l'organe 32 de commande d'armement ou de l'organe 31 de commande marche/arrêt du dispositif 1 lorsque ces derniers sont communs, et l'unité de pilotage est configurée pour commander le passage de l'état ouvert à l'état fermé de l'organe 22 d'obturation normalement ouvert au moins à l'état actionné de l'organe 31 de commande marche/arrêt du dispositif 1.

L'unité 12 de pilotage est configurée pour commander le passage de l'état ouvert à l'état fermé de l'organe 21 d'obturation normalement fermé et le passage de l'état fermé à l'état ouvert de l'organe 22 d'obturation normalement ouvert au moins à l'état actionné du ou des organes 34 de commande de la commande 17 principale d'ouverture du système 16 de fermeture.

En pratique, le fonctionnement d'un dispositif 1, tel que décrit ci-dessous, peut être comme suit.

On suppose que le tube 5 de détonation de l'ensemble 2 a été prérempli en comburant pour permettre l'obtention d'une pression prédéterminée à l'intérieur de l'enceinte 13 du tube 5 de détonation. On suppose que l'ensemble 2 a été accroché au porteur 23 formé par un drone. L'engin ainsi formé est apte à voler. On suppose que la télécommande est mise en marche par actionnement simultané des deux organes de commande marche/arrêt de ladite télécommande 3. A ce stade, l'organe 22 d'obturation normalement ouvert de la liaison 20 obturable de raccordement de la réserve 19 de gaz au tube 5 de détonation de la commande 18 de secours est fermé par l'unité 12 de pilotage dudit ensemble 2.

L'opérateur peut sélectionner si nécessaire, par actionnement d'un organe de commande de la télécommande, le tube 5 de détonation correspondant à l'ensemble 2 couplé au porteur 23. L'opérateur actionne l'organe 32 de commande d'armement de la télécommande. A cette étape, l'unité 12 de pilotage commande le passage de l'état fermé à l'état ouvert de l'organe 21 d'obturation normalement fermé de la liaison 20 obturable de raccordement de la réserve 19 de gaz au tube 5 de détonation de la commande 18 de secours. Le tube 5 de détonation est dit armé. Le porteur 23 est piloté jusqu'à l'emplacement cible souhaité pour une détonation.

Une fois le site atteint, le porteur 23 survole le site avec la bouche 14 de sortie du tube 5 de détonation orientée vers le sol. L'opérateur actionne, sur la télécommande 3, l'organe 33 de commande d'ouverture/fermeture du deuxième conduit 8 obturable pour alimenter le tube 5 de détonation en carburant. L'unité 12 de pilotage commande l'ouverture du deuxième conduit 8 par actionnement de l'organe 9 d'obturation de ce deuxième conduit 8.

L'opérateur actionne ensuite sur la télécommande 3 les organes 34 de commande de la commande 17 principale d'ouverture du système 16 de fermeture. L'unité 12 de pilotage est configurée, pour à partir de cet actionnement des organes 34 de commande de la commande 17 principale d'ouverture du système 16 de fermeture, commander le fonctionnement du détonateur 171 qui génère la mise à feu du mélange détonant. L'explosion du mélange détonant génère l'ouverture du système 16 de fermeture de la bouche 14 de sortie du tube 5 de détonation et l'onde de choc se propage en direction de la cible. La mission du dispositif 1 est achevée.

Une fois l'actionnement des organes 34 de commande de la commande 17 principale d'ouverture réalisé, l'unité de pilotage est configurée pour commander le passage à l'état ouvert de l'organe d'obturation normalement ouvert et le passage à l'état fermé de l'organe d'obturation normalement fermé de la liaison 20 obturable de raccordement de la réserve de gaz au tube de ladite commande de secours.

L'engin doit retourner au sol pour permettre un nouveau chargement en comburant du tube 5 de détonation et le changement de la réserve de carburant pour un nouveau tir.

Il est à noter que les organes de commande de la télécommande doivent être actionnés suivant un ordre prédéterminé, cet ordre prédéterminé correspond à celui décrit ci-dessus. L'actionnement d'un organe de commande de manière anticipée par rapport à l'ordre prédéterminé est sans effet.

Au cours de ce fonctionnement tel que décrit ci-dessus, le système 16 de fermeture de la bouche 14 de sortie du tube 5 de détonation peut passer de l'état fermé à l'état ouvert si la commande 18 de secours est activé, c'est-à-dire si la liaison 20 obturable de raccordement de la réserve 19 de gaz au tube 5 de détonation de la commande 18 de secours est ouverte, ce qui correspond après armement du dispositif 1 au passage de l'état fermé à l'état ouvert de l'organe 22 d'obturation normalement ouvert qui a été fermé lors de l'armement.

Cette ouverture peut être commandée de différentes manières et notamment manuellement ou automatiquement. Ainsi, l'opérateur peut actionner l'organe 35 de commande de la commande 18 de secours équipant la télécommande 3. L'ouverture peut également être commandée automatiquement via l'unité 12 de pilotage en fonction des données fournies à l'unité 12 de pilotage par l'unité 11 de stockage d'énergie ou par le récepteur 42 du système 4 de communication pour commander une ouverture de la liaison 20 obturable de raccordement de la réserve 19 de gaz au tube 5 de détonation de la commande 18 de secours, notamment lorsqu'une tension électrique insuffisante ou une absence de signal de réception au niveau du récepteur sont détectés.

L'ouverture de la liaison 20 obturable de raccordement de la réserve 19 de gaz au tube 5 de détonation entraîne une alimentation en gaz de l'enceinte 13 du tube 5 de détonation. Cette alimentation en gaz crée une surpression de l'enceinte 13 du tube 5 de détonation et par suite le passage du système 16 de fermeture de la bouche de sortie du tube 5 de détonation de l'état fermé à l'état ouvert. Le comburant poussé par le gaz neutre s'échappe dans l'atmosphère et une détonation ultérieure est impossible. Il doit être noté que cette ouverture peut s'opérer y compris au stade où l'enceinte 13 du tube 5 de détonation a été alimentée en carburant. Il en résulte un fonctionne parfaitement sûr du dispositif 1.

## Revendications

1. Dispositif (1) pour générer une onde de choc par détonation, ledit dispositif (1) comprenant un ensemble (2), une télécommande (3), et un système (4) de communication par liaison sans fil entre la télécommande (3) et ledit ensemble (2) pour une commande à distance dudit ensemble (2) avec ladite télécommande (3), ledit ensemble (2) comprenant un tube (5) de détonation, un premier conduit (6) obturable d'alimentation en fluide du tube (5) de détonation raccordable à une source de comburant, un deuxième conduit (8) obturable d'alimentation en fluide du tube (5) de détonation raccordable à une source (10) de carburant embarquable sur ledit ensemble (2), une unité (11) de stockage d'énergie électrique et une unité (12) de pilotage, ledit tube (5) de détonation délimitant une enceinte (13) présentant au moins une bouche (14) de sortie, et en ce que l'ensemble (2), qui est équipé de moyens (15) d'accroche pour permettre un couplage dudit ensemble (2) à un porteur (23) de type aéronef piloté à distance, comprend un système (16) de fermeture étanche de ladite au moins une bouche (14) de sortie dudit tube (5) de détonation pour permettre un pré-remplissage en comburant de ladite enceinte (13), en ce que le système (16) de fermeture sensible à la pression est configuré pour passer d'un état dit fermé correspondant à l'état fermé de la bouche (14) de sortie du tube (5) de détonation à un état dit ouvert correspondant à l'état ouvert de la bouche (14) de sortie du tube (5) de détonation en fonction de la pression régnant à l'intérieur dudit tube (5) de détonation, en ce que l'unité (12) de pilotage est configurée au moins pour commander l'ouverture du deuxième conduit (8) pour permettre la formation à l'intérieur du tube (5) de détonation, à l'état prérempli du tube (5) de détonation en comburant, d'un mélange gazeux comburant/carburant détonnant et en ce que l'ensemble (2) comprend une commande (17) principale d'ouverture du système (16) de fermeture et une commande (18) auxiliaire dite de secours d'ouverture du système (16) de fermeture, cette commande (18) de secours comprenant une réserve (19) de gaz sous pression apte à être portée par le tube (5) de détonation et une liaison (20) obturable de raccordement de la réserve (19) de gaz au tube (5) de détonation équipée d'un ou plusieurs organes (21, 22) d'obturation, le ou chaque organe (21, 22) d'obturation étant monté mobile entre une position ouverte et une position fermée.

2. Dispositif (1) pour générer une onde de choc par détonation selon la revendication 1, **caractérisé en ce que** la télécommande (3) comprend des organes de commande actionnables manuellement, lesdits organes de commande comprenant au moins un organe (31) de commande marche/arrêt du dispositif (1), un organe (33) de commande d'ouverture/fermeture du deuxième conduit (8) obturable, un ou plusieurs organes (34) de commande de la commande (17) principale d'ouverture du système (16) de fermeture et un organe (35) de commande de la commande (18) de secours d'ouverture du système (16) de fermeture actif sur l'ouverture/fermeture de la liaison (20) obturable de raccordement de la réserve (19) de gaz au tube (5) de détonation de ladite commande (18) de secours.

3. Dispositif (1) pour générer une onde de choc par détonation selon l'une des revendications 1 ou 2, **caractérisé en ce que** le système (4) de communication par liaison sans fil comprend au moins un émetteur (41) intégré à la télécommande (3) et au moins un récepteur (42) intégré audit ensemble (2) et **en ce que** l'unité (12) de pilotage dudit ensemble (2) est configurée pour acquérir des données du récepteur (42) du système (4) de communication par liaison sans fil.

4. Dispositif (1) pour générer une onde de choc par détonation selon l'une des revendications 1 à 3, **caractérisé en ce que** l'unité (12) de pilotage dudit ensemble (2) est configurée pour acquérir des données de l'unité (11) de stockage d'énergie électrique.

5. Dispositif (1) pour générer une onde de choc par détonation selon l'une des revendications 1 à 4, **caractérisé en ce que** la liaison (20) obturable de raccordement de la réserve (19) de gaz au tube (5) de détonation de la commande (18) de secours étant équipée de plusieurs organes (21, 22) d'obturation, lesdits organes (21, 22) d'obturation sont disposés en série sur ladite liaison (20).

6. Dispositif (1) pour générer une onde de choc par détonation selon l'une des revendications 1 à 5 prise en combinaison avec la revendication 3, **caractérisé en ce que** l'unité (12) de pilotage dudit ensemble (2) est configurée pour commander le passage de l'état fermé à l'état ouvert du ou d'au moins l'un des organes (21, 22) d'obturation de la liaison (20) obturable de raccordement de la réserve (19) de gaz au tube (5) de détonation de la commande (18) de secours au moins en fonction des données fournies par le récepteur (42) du système (4) de communication par liaison sans fil.

7. Dispositif (1) pour générer une onde de choc par détonation selon l'une des revendications 1 à 6 prise en combinaison avec la revendication 4, **caractérisé en ce que** l'unité (12) de pilotage dudit ensemble (2) est configurée pour commander le passage de l'état fermé à l'état ouvert du ou d'au moins l'un des organes (21, 22) d'obturation de la liaison (20) obturable de raccordement de la réserve (19) de gaz au tube (5) de détonation de la commande (18) de secours au moins en fonction des données fournies par l'unité (11) de stockage d'énergie électrique.

8. Dispositif (1) pour générer une onde de choc par détonation selon l'une des revendications 1 à 7 prise en combinaison avec la revendication 2, **caractérisé en ce que** l'unité (12) de pilotage est configurée pour commander le passage de l'état fermé à l'état ouvert du ou d'au moins l'un des organes (21, 22) d'obturation de la liaison (20) obturable de raccordement de la réserve (19) de gaz au tube (5) de détonation de la commande (18) de secours au moins à l'état actionné de l'organe (35) de commande de la commande (18) de secours d'ouverture du système (16) de fermeture.

9. Dispositif (1) pour générer une onde de choc par détonation selon l'une des revendications 1 à 8 prise en combinaison avec la revendication 2, **caractérisé en ce que** la télécommande (3) comprend au moins un organe (32) de commande dit d'armement du dispositif (1) actionnable manuellement, cet organe (32) de commande étant commun ou distinct du ou des organes (31) de commande marche/arrêt du dispositif (1), **en ce qu'**au moins l'un (21) des organes (21, 22) d'obturation de la liaison (20) obturable de raccordement de la réserve (19) de gaz au tube (5) de détonation de la commande (18) de secours est un organe d'obturation normalement fermé et **en ce que** l'unité (12) de pilotage est configurée pour commander le passage de l'état fermé à l'état ouvert dudit organe d'obturation normalement fermé au moins à l'état actionné de l'organe (32) de commande d'armement.

10. Dispositif (1) pour générer une onde de choc par détonation selon l'une des revendications 1 à 9 prise en combinaison avec la revendication 2, **caractérisé en ce que** la télécommande (3) comprend au moins un organe (32) de commande dit d'armement du dispositif (1) actionnable manuellement, cet organe (32) de commande étant commun ou distinct du ou des organes (31) de commande marche/arrêt du dispositif (1), **en ce qu'**au moins l'un (22) des organes (21, 22) d'obturation de la liaison (20) obturable de raccordement de la réserve (19) de gaz au tube (5) de détonation de la commande (18) de secours est un organe d'obturation normalement ouvert et **en ce que** l'unité (12) de pilotage est configurée pour commander le passage de l'état ouvert à l'état fermé dudit organe d'obturation normalement ouvert au moins à l'état actionné de l'organe (32) de commande marche/arrêt du dispositif (1).

11. Dispositif (1) pour générer une onde de choc par détonation selon la revendication 10 prise en combinaison avec la revendication 9, **caractérisé en ce que** l'unité (12) de pilotage est configurée pour commander le passage de l'état ouvert à l'état fermé dudit organe (21) d'obturation normalement fermé et le passage de l'état fermé à l'état ouvert dudit organe d'obturation normalement ouvert au moins à l'état actionné du ou des organes (34) de commande de la commande (17) principale d'ouverture du système (16) de fermeture.

12. Dispositif (1) pour générer une onde de choc par détonation selon l'une des revendications 1 à 11, **caractérisé en ce que** le gaz de la réserve (19) de gaz sous pression de la commande (18) de secours est un gaz dit neutre c'est-à-dire non réactif chimiquement avec le mélange gazeux comburant/carburant détonnant.

13. Dispositif (1) pour générer une onde de choc par détonation selon l'une des revendications 1 à 12, **caractérisé en ce que** la commande (17) principale d'ouverture du système (16) de fermeture comprend un détonateur (171) s'étendant au moins partiellement à l'intérieur du tube (5) de détonation.

14. Dispositif (1) pour générer une onde de choc par détonation selon l'une des revendications 1 à 13, **caractérisé en ce que** le système (16) de fermeture comprend un élément (161) gonflable fixé au tube (5) de détonation et configuré pour se détacher au moins partiellement du tube (5) de détonation à l'état gonflé au-delà d'une pression de gonflage prédéterminée.

15. Engin volant comprenant un porteur (23) de type aéronef pilotable à distance et un dispositif (1) pour générer une onde de choc par détonation, **caractérisé en ce que** le dispositif (1) pour générer une onde de choc par détonation est conforme à l'une des revendications 1 à 14 et **en ce que** l'ensemble (2) du dispositif (1) est couplable au porteur (23).

## Patentansprüche

1. Vorrichtung (1) zum Erzeugen einer Stoßwelle durch Detonation, wobei die Vorrichtung (1) eine Anordnung (2), eine Fernbedienung (3) und ein System (4) zur drahtlosen Kommunikation zwischen der Fernbedienung (3) und der Anordnung (2) für eine Fernsteuerung der Anordnung (2) mit der Fernbedienung (3) umfasst, wobei die Anordnung (2) ein Detonationsrohr (5), eine erste absperrbare Leitung (6) zum Zuführen von Fluid zum Detonationsrohr (5), die an eine Sauerstoffträgerquelle angeschlossen werden kann, eine zweite absperrbare Leitung (8) zum Zuführen von Fluid zum Detonationsrohr (5), die an eine Brennstoffquelle (10) angeschlossen werden kann, die an der Anordnung (2) angebracht werden kann, eine elektrische Energiespeichereinheit (11) und eine Steuereinheit (12) umfasst, wobei das Detonationsrohr (5) ein Gehäuse (13) begrenzt, das mindestens eine Auslassöffnung (14) aufweist, und
dass die Anordnung (2), die mit Befestigungsmitteln (15) ausgestattet ist, um ein Koppeln der Anordnung (2) mit einem Träger (23) vom Typ ferngesteuertes Flugzeug zu ermöglichen, ein System (16) zum dichten Verschließen der mindestens einen Auslassöffnung (14) des Detonationsrohrs (5) umfasst, um ein Vorfüllen des Gehäuses (13) mit dem Sauerstoffträger zu ermöglichen, dass das druckempfindliche Schließsystem (16) dazu konfiguriert ist, von einem geschlossenen Zustand, der dem geschlossenen Zustand der Auslassöffnung (14) des Detonationsrohrs (5) entspricht, in einen offenen Zustand, der dem offenen Zustand der Austrittsmündung (14) des Detonationsrohrs (5) entspricht, in Abhängigkeit vom im Inneren des Detonationsrohrs (5) herrschenden Druck überzugehen, dass die Steuereinheit (12) dazu konfiguriert ist, mindestens das Öffnen der zweiten Leitung (8) zu steuern, um das Bilden eines explosiven gasförmigen Gemischs aus Sauerstoffträger und Brennstoff im Inneren des Detonationsrohrs (5) im vorgefüllten Zustand des Detonationsrohrs (5) mit dem Sauerstoffträger zu ermöglichen, und dass die Anordnung (2) eine Hauptöffnungssteuerung (17) für das Schließsystem (16) und eine Hilfsöffnungssteuerung (18), Notöffnungssteuerung genannt, für das Schließsystem (16) umfasst, wobei die Notsteuerung (18) einen Druckgasvorrat (19), der dazu ausgelegt ist, durch das Detonationsrohr (5) transportiert zu werden, und eine absperrbare Verbindung (20) für das Anschließen des Gasvorrats (19) an das Detonationsrohr (5) umfasst, die mit einem oder mehreren Absperrelementen (21, 22) ausgestattet ist, wobei das oder jedes Absperrelement (21, 22) zwischen einer offenen Position und einer geschlossenen Position beweglich montiert ist.

2. Vorrichtung (1) zum Erzeugen einer Stoßwelle durch Detonation nach Anspruch 1, **dadurch gekennzeichnet, dass** die Fernbedienung (3) manuell betätigbare Steuerelemente umfasst, wobei die Steuerelemente mindestens ein Steuerelement (31) zum Ein-/Ausschalten der Vorrichtung (1), ein Steuerelement (33) zum Öffnen/Schließen der zweiten absperrbaren Leitung (8), ein oder mehrere Steuerelemente (34) für die Hauptöffnungssteuerung (17) für das Schließsystem (16) und ein Steuerelement (35) für die Notöffnungssteuerung (18) für das Schließsystem (16), das beim Öffnen/Schließen der absperrbaren Verbindung (20) zum Anschließen des Gasvorrats (19) an das Detonationsrohr (5) der Notsteuerung (18) aktiv ist, umfassen.

3. Vorrichtung (1) zum Erzeugen einer Stoßwelle durch Detonation nach einem der Ansprüche 1 oder 2, **dadurch gekennzeichnet, dass** das drahtlose Kommunikationssystem (4) mindestens einen in die Fernbedienung (3) integrierten Sender (41) und mindestens einen in die Anordnung (2) integrierten Empfänger (42) umfasst und dass die Steuereinheit (12) der Anordnung (2) dazu konfiguriert ist, Daten vom Empfänger (42) des drahtlosen Kommunikationssystems (4) zu erfassen.

4. Vorrichtung (1) zum Erzeugen einer Stoßwelle durch Detonation nach einem der Ansprüche 1 bis 3, **dadurch gekennzeichnet, dass** die Steuereinheit (12) der Anordnung (2) dazu konfiguriert ist, Daten von der elektrischen Energiespeichereinheit (11) zu erfassen.

5. Vorrichtung (1) zum Erzeugen einer Stoßwelle durch Detonation nach einem der Ansprüche 1 bis 4, **dadurch gekennzeichnet, dass** die absperrbare Verbindung (20) zum Anschließen des Gasvorrats (19) an das Detonationsrohr (5) der Notsteuerung (18) mit mehreren Absperrelementen (21, 22) ausgestattet ist, wobei die Absperrelemente (21, 22) in Reihe an der Verbindung (20) angeordnet sind.

6. Vorrichtung (1) zum Erzeugen einer Stoßwelle durch Detonation nach einem der Ansprüche 1 bis 5 in Kombination mit Anspruch 3, **dadurch gekennzeichnet, dass** die Steuereinheit (12) der Anordnung (2) dazu konfiguriert ist, den Übergang vom geschlossenen Zustand in den offenen Zustand des oder des mindestens einen der Absperrelemente (21, 22) für die absperrbare Verbindung (20) zum Anschließen des Gasvorrats (19) an das Detonationsrohr (5) der Notsteuerung (18) mindestens in Abhängigkeit von den vom Empfänger (42) des drahtlosen Kommunikationssystems (4) gelieferten Daten zu steuern.

7. Vorrichtung (1) zum Erzeugen einer Stoßwelle durch Detonation nach einem der Ansprüche 1 bis 6 in Kombination mit Anspruch 4, **dadurch gekennzeichnet, dass** die Steuereinheit (12) der Anordnung (2) dazu konfiguriert ist, den Übergang vom geschlossenen Zustand in den offenen Zustand des oder des mindestens einen der Absperrelemente (21, 22) für die absperrbare Verbindung (20) zum Anschließen des Gasvorrats (19) an das Detonationsrohr (5) der Notsteuerung (18) mindestens in Abhängigkeit von den von der elektrischen Energiespeichereinheit (11) gelieferten Daten zu steuern.

8. Vorrichtung (1) zum Erzeugen einer Stoßwelle durch Detonation nach einem der Ansprüche 1 bis 7 in Verbindung mit Anspruch 2, **dadurch gekennzeichnet, dass** die Steuereinheit (12) dazu konfiguriert ist, den Übergang vom geschlossenen Zustand in den offenen Zustand des oder des mindestens einen der Absperrelemente (21, 22) für die absperrbare Verbindung (20) zum Anschließen des Gasvorrats (19) an das Detonationsrohr (5) der Notsteuerung (18) mindestens im betätigten Zustand des Steuerelements (35) der Notöffnungssteuerung (18) für das Schließsystem (16) zu steuern.

9. Vorrichtung (1) zum Erzeugen einer Stoßwelle durch Detonation nach einem der Ansprüche 1 bis 8 in Verbindung mit Anspruch 2, **dadurch gekennzeichnet, dass** die Fernbedienung (3) mindestens ein Steuerelement (32) zum Laden der manuell betätigbaren Vorrichtung (1) umfasst, wobei das Steuerelement (32) gemeinsam oder getrennt von dem oder den Steuerelementen (31) für das Ein-/Ausschalten der Vorrichtung (1) ist, dass mindestens eines (21) der Absperrelemente (21, 22) für die absperrbare Verbindung (20) zum Anschließen des Gasvorrats (19) an das Detonationsrohr (5) der Notsteuerung (18) ein normalerweise geschlossenes Absperrelement ist und dass die Steuereinheit (12) dazu konfiguriert ist, den Übergang vom geschlossenen Zustand in den offenen Zustand des normalerweise geschlossenen Absperrelements mindestens im betätigten Zustand des Ladesteuerelements (32) zu steuern.

10. Vorrichtung (1) zum Erzeugen einer Stoßwelle durch Detonation nach einem der Ansprüche 1 bis 9 in Kombination mit Anspruch 2, **dadurch gekennzeichnet, dass** die Fernbedienung (3) mindestens ein Steuerelement (32) zum Laden der manuell betätigbaren Vorrichtung (1) umfasst, wobei das Steuerelement (32) gemeinsam oder getrennt von dem oder den Steuerelementen (31) für das Ein-/Ausschalten der Vorrichtung (1) ist, dass mindestens eines (22) der Absperrelemente (21, 22) für die absperrbare Verbindung (20) zum Anschließen des Gasvorrats (19) an das Detonationsrohr (5) der Notsteuerung (18) ein normalerweise offenes Absperrelement ist und dass die Steuereinheit (12) dazu konfiguriert ist, den Übergang vom offenen Zustand in den geschlossenen Zustand des normalerweise offenen Absperrelements mindestens im betätigten Zustand des Ladesteuerelements (32) für das Ein-/Ausschalten der Vorrichtung (1) zu steuern.

11. Vorrichtung (1) zum Erzeugen einer Stoßwelle durch Detonation nach Anspruch 10 in Kombination mit Anspruch 9, **dadurch gekennzeichnet, dass** die Steuereinheit (12) dazu konfiguriert ist, den Übergang vom offenen Zustand in den geschlossenen Zustand des normalerweise geschlossenen Absperrelements (21) und den Übergang vom geschlossenen Zustand in den offenen Zustand des normalerweise offenen Absperrelements mindestens im betätigten Zustand des oder der Steuerelemente (34) der Hauptöffnungssteuerung (17) des Schließsystems (16) zu steuern.

12. Vorrichtung (1) zum Erzeugen einer Stoßwelle durch Detonation nach einem der Ansprüche 1 bis 11, **dadurch gekennzeichnet, dass** das Gas aus dem Druckgasvorrat (19) der Notsteuerung (18) ein neutrales Gas, d. h. ein nicht chemisch mit dem explosiven gasförmigen Gemisch aus Sauerstoffträger und Brennstoff reaktives, ist.

13. Vorrichtung (1) zum Erzeugen einer Stoßwelle durch Detonation nach einem der Ansprüche 1 bis 12, **dadurch gekennzeichnet, dass** die Hauptöffnungssteuerung (17) des Schließsystems (16) einen Detonator (171) umfasst, der sich mindestens teilweise in das Innere des Detonationsrohrs (5) erstreckt.

14. Vorrichtung (1) zum Erzeugen einer Stoßwelle durch Detonation nach einem der Ansprüche 1 bis 13, **dadurch gekennzeichnet, dass** das Schließsystem (16) ein aufblasbares Element (161) umfasst, das an dem Detonationsrohr (5) befestigt und dazu konfiguriert ist, sich im aufgeblasenen Zustand ab einem vorbestimmten Aufblasdruck mindestens teilweise vom Detonationsrohr (5) zu lösen.

15. Flugkörper, der einen Träger (23) vom Typ ferngesteuertes Flugzeug und eine Vorrichtung (1) zum Erzeugen einer Stoßwelle durch Detonation umfasst, **dadurch gekennzeichnet, dass** die Vorrichtung (1) zum Erzeugen einer Stoßwelle durch Detonation einem der Ansprüche 1 bis 14 entspricht und dass die Anordnung (2) der Vorrichtung (1) an den Träger (23) gekoppelt werden kann.

## Claims

1. A device (1) for generating a shock wave by detonation, said device (1) comprising an assembly (2), a remote control (3), and a wireless link communication system (4) between the remote control (3) and said assembly (2) for a remote control of said assembly (2) with said remote control (3), said assembly (2) comprising a detonation tube (5), a first closable duct (6) for supplying fluid to the detonation tube (5) which could be connected to an oxidizer source, a second closable duct (8) for supplying fluid to the detonation tube (5) which could be connected to a source (10) of fuel on-board said assembly (2), an electrical energy storage unit (11) and a control unit (12), said detonation tube (5) delimiting a chamber (13) having at least one outlet mouth (14), and in that the assembly (2), which is equipped with hooking means (15) to enable coupling of said assembly (2) to a remotely-controlled aircraft-type carrier (23), comprises a system (16) for sealingly closing said at least one outlet mouth (14) of said detonation tube (5) to enable pre-filling of said chamber (13) with oxidizer, in that the pressure-sensitive closure system (16) is configured to switch from a so-called closed state corresponding to the closed state of the outlet mouth (14) of the detonation tube (5) into a so-called open state corresponding to the open state of the outlet mouth (14) of the detonation tube (5) according to the pressure prevailing inside said detonation tube (5), in that the control unit (12) is configured at least to control opening of the second duct (8) to enable the formation inside the detonation tube (5), in the pre-filled state of the detonation tube (5) with oxidizer, of an oxidizer/fuel gaseous mixture and in that the assembly (2) comprises a main control (17) for opening the closure system (16) and a so-called backup auxiliary control (18) for opening the closure system (16), this backup control (18) comprising a reservoir (19) of pressurized gas which could be conveyed by the detonation tube (5) and a closable connection (20) for connecting the gas reservoir (19) to the detonation tube (5) equipped with one or several closing member(s) (21, 22), the or each closing member (21, 22) being movably mounted between an open position and a closed position.

2. The device (1) for generating a shock wave by detonation according to claim 1, **characterized in that** the remote control (3) comprises manually-operable control members, said control members comprising at least one member (31) for controlling on/off of the device (1), a member (33) for controlling the opening/closure of the second closable duct (8), one or several member(s) (34) for controlling the main control (17) for opening the closure system (16) and a member (35) for controlling the backup control (18) for opening the active closure system (16) on the opening/closure of the closable connection (20) for connecting the gas reservoir (19) to the detonation tube (5) of said backup control (18).

3. The device (1) for generating a detonation shock wave according to one of claims 1 or 2, **characterized in that** the wireless link communication system (4) comprises at least one emitter (41) integrated with the remote control (3) and at least one receiver (42) integrated with said assembly (2) and **in that** the control unit (12) of said assembly (2) is configured to acquire data from the receiver (42) of the wireless link communication system (4).

4. The device (1) for generating a detonation shock wave according to one of claims 1 to 3, **characterized in that** the control unit (12) of said assembly (2) is configured to acquire data from the electrical energy storage unit (11).

5. The device (1) for generating a shock wave by detonation according to one of claims 1 to 4, **characterized in that** the closable connection (20) for connecting the gas reservoir (19) to the detonation tube (5) of the backup control (18) being equipped with several closing members (21, 22), said closing members (21, 22) are arranged in series on said connection (20).

6. The device (1) for generating a shock wave by detonation according to one of claims 1 to 5 considered in combination with claim 3, **characterized in that** the control unit (12) of said assembly (2) is configured to control the switch from the closed state into the open state of the or at least one of the closing members (21, 22) of the closable connection (20) for connecting the gas reservoir (19) to the detonation tube (5) of the backup control (18) at least according to the data supplied by the receiver (42) of the wireless link communication system (4).

7. The device (1) for generating a detonation shock wave according to one of claims 1 to 6 considered in combination with claim 4, **characterized in that** the control unit (12) of said assembly (2) is configured to control the switch from the closed state into the open state of the or at least one of the closing members (21, 22) of the closable connection (20) for connecting the gas reservoir (19) to the detonation tube (5) of the backup control (18) at least according to the data supplied by the electrical energy storage unit (11).

8. The device (1) for generating a detonation shock wave according to one of claims 1 to 7 considered in combination with claim 2, **characterized in that** the control unit (12) is configured to control the switch from the closed state into the open state of the or at least one of the closing members (21, 22) of the closable connection (20) for connecting the gas reservoir (19) to the detonation tube (5) of the backup control (18) at least in the actuated state of the control member (35) of the backup control (18) for opening the closure system (16).

9. The device (1) for generating a detonation shock wave according to one of claims 1 to 8 considered in combination with claim 2, **characterized in that** the remote control (3) comprises at least one control member (32), so-called arming control member for arming the manually-operable device (1), this control member (32) being common with or distinct from the on/off control member(s) (31) for controlling on/off of the device (1), **in that** at least one (21) of the closing members (21, 22) of the closable connection (20) for connecting the gas reservoir (19) to the detonation tube (5) of the backup control (18) is a normally closed closing member and **in that** the control unit (12) is configured to control the switch from the closed state into the open state of said normally-closed closing member at least in the actuated state of the arming control member (32).

10. The device (1) for generating a detonation shock wave according to one of claims 1 to 9 considered in combination with claim 2, **characterized in that** the remote control (3) comprises at least one control member (32), so-called arming control member for arming the manually-operable device (1), said control member (32) being common with or distinct from the on/off control member(s) (31) of the device (1), **in that** at least one (22) of the closing members (21, 22) of the closable connection (20) for connecting the gas reservoir (19) to the detonation tube (5) of the backup control (18) is a normally-open closing member and **in that** the control unit (12) is configured to control the switch from the open state into the closed state of said normally-open closing member at least in the actuated state of the on/off control member (32) of the device (1).

11. The device (1) for generating a detonation shock wave according to claim 10 considered in combination with claim 9, **characterized in that** the control unit (12) is configured to control the switch from the open state into the closed state of said normally-closed closing member (21) and the switch from the closed state into the open state of said normally-open closing member at least in the actuated state of the at least one control member (34) of the main control (17) for opening the closure system (16).

12. The device (1) for generating a shock wave by detonation according to one of claims 1 to 11, **characterized in that** the gas of the pressurized gas reservoir (19) of the backup control (18) is a so-called neutral gas, that is to say not chemically reactive with the detonating oxidizer/fuel gaseous mixture.

13. The device (1) for generating a detonation shock wave according to one of claims 1 to 12, **characterized in that** the main control (17) for opening the closure system (16) comprises a detonator (171) extending at least partially inside the detonation tube (5).

14. The device (1) for generating a detonation shock wave according to one of claims 1 to 13, **characterized in that** the closure system (16) comprises an inflatable element (161) fastened to the detonation tube (5) and configured to at least partially detach from the detonation tube (5) in the inflated state beyond a predetermined inflation pressure.

15. A flying machine comprising a remotely-controllable aircraft support (23) and a device (1) for generating a shock wave by detonation, **characterized in that** the device (1) for generating a shock wave by detonation is in accordance with one of claims 1 to 14 and **in that** the assembly (2) of the device (1) could be coupled to the carrier (23).
